# EUROPÄISCHE PATENTSCHRIFT

(11) **EP 1 507 100 B1**
(45) Veröffentlichungstag und Bekanntmachung des Hinweises auf die Patenterteilung: **28.03.2007**
(21) Anmeldenummer: 04017188.6
(22) Anmeldetag: 21.07.2004
(51) Int. Cl.: F16H 59/68, F16H 63/32

(54) **Anordnung zur Erfassung der Lageposition einer Schaltgabel**
Assembly to measure the position of a shift fork
Dispositif pour détécter la position de fourchette de boîte de vitesses

(30) Priorität: 12.08.2003 DE 10336971
(43) Veröffentlichungstag der Anmeldung: 16.02.2005
(73) Patentinhaber: Dr.Ing. h.c.F. Porsche Aktiengesellschaft, 70435 Stuttgart (DE)
(72) Erfinder: Höbel, Peter, Dipl.-Ing. (FH), 75242 Neuhausen (DE)

(56) Entgegenhaltungen:
- EP-A- 0 882 912
- US-A- 5 832 777
- PATENT ABSTRACTS OF JAPAN Bd. 015, Nr. 432 (M-1175), 5. November 1991 (1991-11-05) & JP 03 181657 A (NISSAN MOTOR CO LTD), 7. August 1991 (1991-08-07)
- PATENT ABSTRACTS OF JAPAN Bd. 1996, Nr. 02, 29. Februar 1996 (1996-02-29) & JP 07 269706 A (JIDOSHA KIKI CO LTD), 20. Oktober 1995 (1995-10-20)

## Beschreibung

Die Erfindung betrifft eine Anordnung zur Erfassung der Lageposition einer Schaltgabel gemäß den Merkmalen des Oberbegriffs des Patentanspruchs 1, wie sie aus der EP-A-882912 bekannt geworden ist.

Aus der EP 0 715 098 A1 ist eine Einrichtung zur Erfassung der Lageposition einer Schaltgabel bekannt, bei der an einem Getriebegehäuse ein mit einem Mikroschalter versehener Positionssensor befestigt ist, der in direkten Kontakt mit dem Schaltgabelfuß tritt, um die Neutralstellung der Schaltgabel zu erfassen.

Nachteilig dabei ist, dass sich aufgrund der beim Gangwechsel auftretenden Schaltkräfte die Schaltgabeln bis zu einem bestimmtem Maß verbiegen können, so dass letztendlich die am Schaltgabelfuss erfaßte Stellung der Schaltgabel nicht die genaue Position der Schaltmuffe wiedergibt. Oft sind aufgrund der hohen Getriebebelastungen, die zu Verspannungen bzw. Verbiegungen der Getriebewellen führen, die Schaltgabeln nicht über ihren gesamten Umfang mit den Schaltmuffen in Kontakt, um Verklemmungen zwischen Schaltgabel und Schaltmuffe zu vermeiden; durch diese Maßnahme wird jedoch die Steifigkeit der Schaltgabel reduziert und damit die Tendenz zu Verbiegungen der Schaltgabel verstärkt.

Aus der DE 199 24 995 A1 ist weiterhin eine Anordnung zur Erfassung der Translationslage eine Stellelementes in einem Getriebe bekannt, bei dem die Positionserfassungseinrichtung einen Magneten und einen Magnetfeldsensor umfaßt.

Aufgabe der Erfindung ist es, eine Anordnung zur Erfassung der Lageposition einer Schaltgabel oder Schaltschwinge zu schaffen, bei der ein präzises Wegsignal für die Verstellung der von der Schaltgabel betätigten Schaltmuffe erzielbar ist.

Die Aufgabe wird durch die im Anspruch 1 aufgeführten Merkmale gelöst.

Dadurch, dass der Positionsgeber im wesentlichen am Ende der Schaltgabel angeordnet ist, werden mögliche Durchbiegungen der Schaltgabel erfaßt bzw. kompensiert, so dass über die Geber- Sensor- Einheit die genaue Lage der auf der Getriebewelle angeordneten Schaltmuffe ermittelt werden kann.

Durch die in den Unteransprüchen aufgeführten Maßnahmen sind vorteilhafte Ausgestaltungen und Weiterbildungen des Schaltgetriebes möglich.

Für eine vorteilhafte berührungslose Lageerfassung der Schaltgabel ist als Positionsgeber ein Magnet vorgesehen, während der im Abstand dazu am bzw. im Getriebegehäuse angeordnete Sensor als Magnetfeldsensor ausgebildet ist.

Zur Befestigung bzw. Aufnahme des Magneten ist an einem der beiden Enden der Schaltgabel ein Fortsatz vorgesehen, der vorzugsweise einstückig aus der Schaltgabel herausgebildet ist.

Der Magnet ist wiederum in einem Element aufgenommen, das am Fortsatz befestigt ist. Wenn die Schaltgabel z.B. aus Stahl ausgeführt ist, können die Magnetfeldlinien des Magneten beeinflusst werden und somit das Sensorsignal geschwächt oder verfälscht werden. Das aus einem Nichteisenmetall bestehende Aufnahmeelement für den Magneten verhindert in diesem Fall eine derartige Störung.

Dadurch, dass der Sensor in einem separaten Gehäuse aufgenommen ist, das in einer Öffnung des Getriebegehäuses eingesteckt ist, können für eine notwendige horizontale Ausrichtung des Sensors Schrägen im Getriebegehäuse ausgeglichen werden.

Ein Ausführungsbeispiel der Erfindung ist in der Zeichnung dargestellt, und wird nachfolgend näher erläutert.

Es zeigen
- Fig. 1: eine Schaltgabel mit einer Positionserkennungseinrichtung und

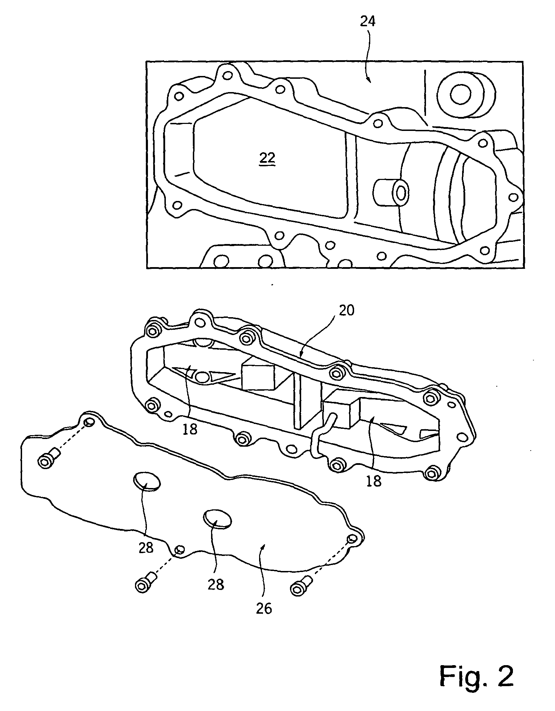

- Fig. 2: eine Explosionsdarstellung von am Getriebegehäuse befestigten Sensorelementen

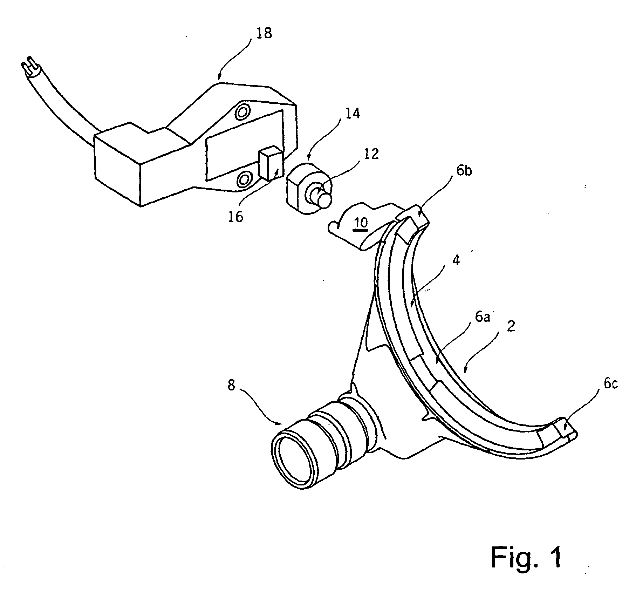

Die in Fig. 1 dargestellte Schaltgabel besteht aus einem gabelförmigen Grundkörper 2, der einen innenliegenden Kragen 4 aufweist, der auf bekannte Art und Weise in die Ringnut einer nicht dargestellten Schaltmuffe eingreift. Wie allgemein bekannt, wird über die Schaltmuffe eine drehfeste Verbindung zwischen einer Getriebewelle und auf der Getriebewelle angeordneten Los- Zahnrädern hergestellt. Im vorliegenden Ausführungsbeispiel sind aus dem Kragen 4 drei radiale Stege 6a, 6b und 6c herausgebildet, die als unmittelbare Kontaktflächen für die in der Schaltmuffe ausgebildeten Ringnut dienen. Aus der Schaltgabel ist weiterhin eine Lagerbuchse 8 herausgebildet, die zur Aufnahme der Schaltgabel auf einer Lagerachse dient.

Die beispielsweise aus einer Eisenmetall bzw. Eisenmetalllegierung bestehende Schaltgabel weist an ihrem einen gabelförmigen Ende einen Fortsatz 10 auf, an dessen Stirnseite ein mit einem Befestigungspin 12 versehenes Aufnahmeelement 14 für einen Magneten 16 befestigt ist. Das Aufnahmeelement 14 wird mit Hilfe des Pins 12, der in eine Öffnung im Fortsatz 10 eingesteckt ist, am Fortsatz 10 befestigt, wobei z.B. durch Verkleben oder Verstemmen eine dauerhaltbare Verbindung geschaffen ist.

Der Magnet 16 ist Teil einer Anordnung zur Erfassung der Lageposition der Schaltmuffe bzw. der in die Schaltmuffe eingreifenden Schaltgabel. Dazu ist weiterhin ein Sensor 18 vorgesehen, der in einem axialen Abstand zum Magneten 16 angeordnet ist. Der Sensor 18 findet Aufnahme in einem Gehäuseelement 20, das wiederum in einer von der Kontur her angepassten Öffnung 22 in einem Getriebegehäuse 24 Aufnahme findet.

## Patentansprüche

1. Anordnung zur Erfassung der Lageposition einer Schaltgabel oder einer Schaltschwinge in einem Getriebegehäuse eines vorzugsweise automatisierten Schaltgetriebes eines Kraftfahrzeuges mit einem gehäusefest angeordneten Sensor (18) sowie einem an der Schaltgabel oder Schaltschwinge angeordneten Positionsgeber (16), **dadurch gekennzeichnet, dass** der Positionsgeber (16) im wesentlichen an einem Ende der Schaltgabel angeordnet ist.

2. Anordnung nach Anspruch 1, **dadurch gekennzeichnet, dass** zur berührungslosen Lageerfassung der Positionsgeber (16) als Magnet und der Sensor (18) als Magnetfeldsensor ausgebildet ist.

3. Anordnung nach Anspruch 2, **dadurch gekennzeichnet, dass** die Schaltgabel an einem ihrer Enden einen Fortsatz (10) zur Aufnahme des Magneten (16) aufweist.

4. Anordnung nach Anspruch 3, **dadurch gekennzeichnet, dass** der Fortsatz (10) einstückig aus der Schaltgabel herausgebildet ist.

5. Anordnung nach Anspruch 3 oder 4, **dadurch gekennzeichnet, dass** der Magnet (16) in einem Aufnahmeelement (14) befestigt ist, das am Fortsatz (10) befestigt ist.

6. Anordnung nach einem der vorhergehenden Ansprüche, **dadurch gekennzeichnet, dass** der Sensor (18) in einem separaten Gehäuse (20) aufgenommen ist, das in einer Öffnung (22) des Getriebegehäuses (24) eingesteckt und befestigt ist.

## Claims

1. An arrangement for detecting the position of a shift fork or a shift lever in a transmission casing of a preferably automatic gearbox of a motor vehicle, with a sensor (18) fixedly arranged on a housing and a position transmitter (16) arranged on the shift fork or shift lever, **characterised in that** the position transmitter (16) is substantially arranged at one end of the shift fork.

2. An arrangement according to claim 1, **characterised in that**, for contactless position detection, the position transmitter (16) is formed as a magnet and the sensor (18) is formed as a magnetic field sensor.

3. An arrangement according to claim 2, **characterised in that** the shift fork is provided at one of its ends with an extension (10) for receiving the magnet (16).

4. An arrangement according to claim 3, **characterised in that** the extension (10) is formed in one piece with the shift fork.

5. An arrangement according to claim 3 or 4, **characterised in that** the magnet (16) is fixed in a receiving member (14) which is fixed to the extension (10).

6. An arrangement according to any one of the preceding claims, **characterised in that** the sensor (18) is held in a separate housing (20) which is inserted into and fixed in an opening (22) in the transmission casing (24).

## Revendications

1. Système de détection de la position d'une fourchette ou d'une bielle dans un carter d'une boîte de vitesses, de préférence automatisée, d'un véhicule à moteur, comportant un capteur (18) solidaire du carter, ainsi qu'un détecteur de position (16) agencé sur la fourchette de boîte de vitesses ou la bielle de boîte de vitesses, **caractérisé en ce que** le détecteur de position (16) est agencé sensiblement sur une extrémité de la fourchette de boîte de vitesses.

2. Système selon la revendication 1, **caractérisé en ce que**, pour la détection sans contact de la position, le détecteur de position (16) est réalisé sous la forme d'un aimant et le capteur (18) est réalisé sous forme de capteur de champ magnétique.

3. Système selon la revendication 2, **caractérisé en ce que** la fourchette de boîte de vitesses, sur l'une de ses extrémités, comporte une saillie (10) destinée à recevoir l'aimant (16).

4. Système selon la revendication 3, **caractérisé en ce que** la saillie (10) est réalisée d'un seul tenant sur la fourchette de boîte de vitesses.

5. Système selon la revendication 3 ou 4, **caractérisé en ce que** l'aimant (16) est fixé dans un élément de réception (14), qui est fixé contre la saillie (10).

6. Système selon l'une quelconque des revendications précédentes, **caractérisé en ce que** le capteur (18) est logé dans un boîtier (20) séparé qui est enfiché et fixé dans un orifice (22) du carter de boîte de vitesses (24).
